# EUROPEAN PATENT SPECIFICATION

(11) **EP 3 037 790 B1**
(45) Date of publication and mention of the grant of the patent: **17.02.2021**
(21) Application number: 14199936.7
(22) Date of filing: 23.12.2014
(51) Int. Cl.: G01F 1/66

(54) **ULTRASONIC FLOW METER HOUSING WITH INTEGRATED SPRING CONNECTORS**
ULTRASCHALLDURCHFLUSSMESSERGEHÄUSE MIT INTEGRIERTEN FEDERSTECKERN
BOÎTIER DE DÉBITMÈTRE À ULTRASONS AVEC CONNECTEURS À RESSORT INTÉGRÉ

(43) Date of publication of application: 29.06.2016
(73) Proprietor: KAMSTRUP A/S, 8660 Skanderborg (DK)
(72) Inventor: Borring, Peter Nordlund, DK-7100 Vejle (DK)
(74) Representative: Plougmann Vingtoft a/s

(56) References cited:
- EP-A1- 2 594 907
- EP-A2- 1 431 992
- WO-A1-2014/029404
- DE-A1-102006 023 478
- DE-U1-202007 011 493
- US-A1- 2013 047 743

## Description

### FIELD OF THE INVENTION

The present invention relates to the field of ultrasonic flow meters. More specifically it relates to the field of ultrasonic consumption meters, or utility meters, comprising an ultrasonic flow meter, such as ultrasonic consumption meters for measuring consumption data of a supplied utility, e.g. water, heat, or cooling.

### BACKGROUND OF THE INVENTION

Ultrasonic flow meters are used e.g. in connection with precision measurement of fluid flow in connection with charging of a consumed quantity (e.g. heat, cooling or water). An ultrasonic flow meter measures transit time so as to determine a flow rate of a fluid flowing in a flow channel by use of known operation principles for transit time flow meters.

A flow meter may simply measure the consumed amount, e.g. water, and base the billing on this amount. However, for heat and cooling meters, temperature sensors are used to measure the temperature and thereby be able to bill in accordance with energy extracted from the supplied liquid. Such ultrasonic consumption meters may be used in connection with district heating, district cooling and/or distributed water supply.

A typical ultrasonic flow meter used as part of a consumption meter has a housing with a measurement circuit inside which is electrically connected to two spaced apart ultrasonic transducers, e.g. piezo electric transducers. The housing with transducers is arranged for mounting onto a metallic flow meter tube with threaded ends for mounting in an existing piping installation. Further, the housing with measurement circuit and typically also a battery, is preferably watertight so as to avoid any humidity causing damage to the measurement circuit and battery inside the housing.

However, such ultrasonic flow meter typically requires a large number of single components which complicates the assembly process.

Thus prior art flow meter housings involve complex connection structures for electrically connecting the transducers and the measurement circuitry of the meter, such as complex wiring structures and/or separate electrically connecting elements, which complicates the assembly process. Also prior art flow meter housings suffer from requiring separate support structures to be able to withstand the fluid pressure from the fluid in the flow meter tube.

DE 20 2007 011493 U1 describes an ultrasonic flow meter with a plurality of electrically conductive members extending from a lower surface to an upper surface of a housing body, wherein said plurality of electrically conductive members are connecting shanks formed as a flat spring and are used for making a stable and safe electrical connection between a unit such as a printed circuit board and another unit in the ultrasonic flow meter.

### SUMMARY OF THE INVENTION

It would be advantageous to provide an ultrasonic flow meter with a design that allows an easy assembly process in the manufacturing phase, and which alleviates the above problems.

In a first aspect, the invention provides an ultrasonic flow meter housing comprising:
- a housing body having an upper surface and a lower surface, and wherein the lower surface is arranged for mounting onto a flow meter tube, wherein first and second structures on the lower surface are shaped to receive respective first and second ultrasonic transducers separated by a distance,
- a housing cover arranged for engagement with the upper surface of the housing body so as to provide a cavity arranged for housing a measurement circuit, and
- a plurality of electrically conductive members extending from the lower surface to the upper surface of the housing body, wherein said plurality of electrically conductive members serve to operationally connect the first and second ultrasonic transducers with the measurement circuit,
wherein the housing body is constituted by a monolithic polymeric element, and said plurality of electrically conductive members (ECM, ECM1, ECM2) are cast in said monolithic polymeric element such that the material forming the monolithic polymeric element provides a watertight fit to the plurality of electrically conducting members between the lower surface (L_S) and the upper surface (U_S) of the housing body (HB), and in that said monolithic polymeric element and said plurality of electrically conductive members constitute one single unit arranged for assembly with the first and second ultrasonic transducers (T1, T2) and the measurement circuit (MS), and said plurality of electrically conductive members provide operational electrical connection between the first and second ultrasonic transducers (T1, T2) and the measurement circuit (MS) in an assembled state.

With such integration of the electrically conductive members into a monolithic polymeric element, it is possible to provide an ultrasonic flow meter housing which provides a watertight fit around the measurement circuit with only two polymeric components: the housing body and the housing cover, e.g. together with a sealing element to seal between the housing body and the housing cover to form a watertight cavity.

Such flow meter housing is advantageous for an easy assembly of an ultrasonic flow meter. With the prefabricated housing body, only few parts need to be stored before the final connection to a flow meter, or a consumption meter. It allows easy assembly of the housing with ultrasonic transducers and measurement circuit, since the monolithic polymer housing body with all the necessary electrically conductive members integrated and thus fixed at the right positions, only needs to be mechanically combined with the transducers and measurement circuit (preferably on one single printed circuit board, PCB). Especially in embodiments where the ends of the electrically conductive members are shaped as flat springs, a good electrical contact can be established by pressing the transducer and the measurement circuit towards the springs, thus without the need for any soldering or the like. Hereby a compact mount onto a flow meter tube e.g. a flow meter tube with threaded ends for mounting into a fluid transporting pipe system is provided.

Also, the flow meter housing is capable of withstanding fluid pressure from the fluid in the flow meter tube without the need for any separate support elements serving to absorb forces from the fluid pressure.

Especially, said integration of the electrically conductive members into the polymeric material preferably comprises forming a watertight passage for the electrically conductive members from the lower surface to the upper surface of the body housing, so as the polymeric material being cast so as to tightly surround the electrically conductive members, preferably, so at to provide a watertight fit, so as to provide an ultrasonic flow meter complying with at least IP44, such as at least IP54.

In embodiments, the flow meter may be or may be part of a charging consumption meter or utility meter, e.g. a water meter for cold and/or hot water, heat meter, cooling meter, energy meter or smart meter, where the consumption meter is arranged for measuring consumption data of a supplied utility used as a basis for billing. The consumption meter may be used in connection with district heating, district cooling and/or distributed water supply. The consumption meter may be a legal meter, i.e. a meter which is subdued to regulatory demands. Such regulatory demands may be demands to the precision of the measurements. The flow meter is most advantageously used as a heating meter.

By 'measurement circuit' is understood the necessary electronic circuits adapted to control the function of the ultrasound transducers, so as to allow measurement of fluid flow according to known principles of ultrasonic transit time. Especially, the measurement circuit may be arranged on one single PCB capable of generating as output a pulse train indicative of the measured fluid flow rate.

By 'transducer' is understood the piezoelectric element with its electrodes, conductive layers and membranes, as appropriate.

In the following, preferred features and embodiments will be described.

The housing body is constituted by one monolithic polymeric element shaped to integrate all of the plurality of electrically conductive members.

The plurality of electrically conducting members are cast in said monolithic polymeric element such that the material forming the monolithic polymeric element provides a watertight fit to the plurality of electrically conducting members between the lower surface and the upper surface of the housing body. In such embodiment, an easy manufacturing process can be used to provide a watertight fitting around the electrically conductive members, so as to ensure an overall watertight design of the flow meter housing.

The housing body and the housing cover are preferably shaped to form matching portions which, e.g. together with a sealing element, serve to form a watertight cavity for housing the measurement circuit. Both the housing cover and the housing body may be shaped to have parts of a walls forming said cavity, and with the wall part interface in one plane, thus facilitating providing a watertight sealing around the cavity, e.g. by one single sealing element, such as a single o-ring.

The plurality of electrically conductive members may comprise monolithic electrically conductive elements, e.g. the electrically conductive members are metallic members, such as German silver, which is a copper-nickel alloy with a high corrosion resistance.

The plurality of electrically conductive members are preferably fixed in position by the housing body and shaped to provide a spring effect to ensure electrical contact with the first and second ultrasound transducers, and the measurement circuit, when pressed against the electrically conductive members in an assembled state. Such spring effect allows an effective electrical contact to contact points of the transducers, by means of the electrodes of the piezoelectric elements thereof, and the measurement circuit, e.g. contact points on a lower surface of a PCB holding the measurement circuit components. Especially, said electrically conductive members may be shaped to electrically contact one of the ultrasonic transducers in one end by a first flat spring portion, and to electrically contact the measurement circuit in the opposite end by a second flat spring portion, hereby allowing both transducers and measurement circuit to be effectively electrically connected.

At least a portion of said electrically conductive members may be arranged in relation to the housing body such that a contact point with one of the ultrasonic transducer and a contact point with the measurement circuit are spaced apart, such as spaced apart in a direction of a plane comprising the lower surface of the body housing, and preferably as spaced apart in a direction along the flow meter tube. Especially, said cavity arranged for housing the measurement circuit may be positioned between said first and second structures on the lower surface of the housing body. In a preferred implementation of such embodiments, said at least one portion of electrically conductive members are S-shaped. Such S-shape allows the housing body to be shaped thin, thus allowing an overall slim design of the housing. The reason is that the polymeric material can still surround the S-shaped electrical conductive members from the lower to the upper surface, where the upper surface and lower surface extend in respective parallel planes with only a short distance in between these planes, thereby leading to a slim housing profile.

The ultrasonic flow meter housing may comprise two separate electrically conductive members arranged for electrically connecting the first ultrasonic transducer and the measurement circuit, and comprising two separate electrically conductive members arranged for electrically connecting the second ultrasonic transducer and the measurement circuit. This embodiment is suited for transducers with piezoelectric elements with two electrical contact points, i.e. in versions without a common electrical conductor for electrical ground of the two transducers, and particular with piezoelectric elements with one plane electrode and one wrap-around electrode.

To better withstand a high fluid pressure in the flow meter tube, the housing body may have a reinforcing structure on its upper surface above each of said first and second structures on the lower surface shaped to support respective first and second ultrasonic transducers, so as to withstand fluid pressure from fluid in the flow meter tube. Especially, the housing body may comprise holes adjacent to said reinforcing structure, so as to allow the housing body to be fastened to the flow meter tube. It may be preferred, that the ultrasonic flow meter housing is capable of withstanding a fluid pressure from fluid in the measurement flow meter tube via the first and second ultrasonic transducers of at least 3 bar, preferably such as at least 6 bar.

It is preferred that the plurality of electrically conducting members are arranged to operationally connect the first and second ultrasonic transducers when positioned in said respective first and second structures with the measurement circuit, when the measurement circuit is positioned in said cavity, thus serving to provide the necessary electrical connection when the transducers and the measurement circuit are in an assembled state.

Preferably, the measurement circuit is arranged to generate an electrical output signal, such as an electrical pulse train, in response to a measured flow rate of fluid flow in the flow meter tube.

In preferred embodiments, the polymeric material for forming the housing body (e.g. also the housing cover) is one of: polyethersulphone, polycarbonate, or polyetheretherketone. It is to be understood that other polymers may be used as well. Preferably, the polymeric material has a high glass transition temperature, preferably above 200 °C, so as to allow the flow meter housing to allow functioning up to a temperature of at least 130 °C.

In the second aspect, the invention provides an ultrasonic flow meter comprising
- an ultrasonic flow meter housing according to the first aspect,
- a flow meter tube,
- first and second ultrasonic transducers arranged to fit into the respective first and second structures of the lower surface of the housing body, and
- a measurement circuit arranged to fit into the cavity.

In a third aspect the invention provides an ultrasonic consumption meter comprising an ultrasonic flow meter according to the second aspect. The consumption meter may be such as: a water meter, a gas meter, a heat meter, or a cooling meter.

In a fourth aspect, the invention provides a method of manufacturing an ultrasonic flowmeter housing as defined in claim 13.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates a sketch of a lower surface and a section sketch of a housing body embodiment with integrated electrically conductive members,
Fig. 2 illustrates a 3D sketch of the housing body embodiment of Fig. 1,
Fig. 3 illustrates an exploded view of an ultrasonic flow meter embodiment, and
Fig. 4 illustrates steps of an embodiment of manufacturing an ultrasonic flow meter.

### DESCRIPTION OF EMBODIMENTS

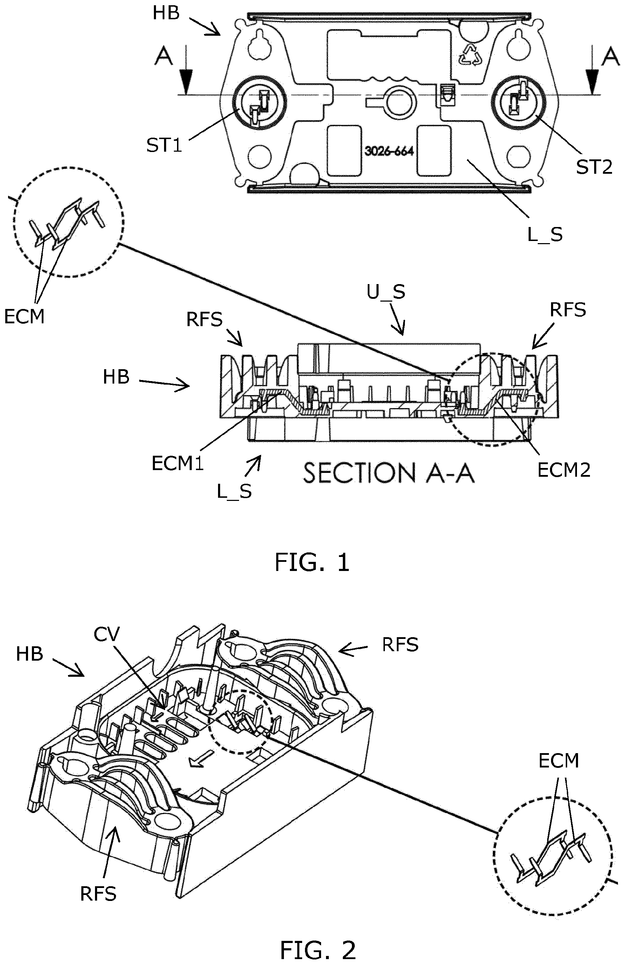

Fig 1 illustrates a sketch of a lower surface L_S and a section sketch of a housing body HB embodiment with integrated electrically conductive members ECM, ECM1, ECM2. Section A-A shows the position of the electrically conductive members ECM1, ECM2 inside the polymeric material forming the monolithic polymeric housing body HB. The electrically conductive members ECM1, ECM2 are cast in the polymeric housing body, and thus provides a watertight fit around the electrically conductive members ECM1, ECM2.

The small sketch shows a set of two electrically conductive members ECM which are cast into the polymeric material of the housing body HB, to form each of the set of ECM1, ECM 2, for providing two electrically connections between ultrasonic transducers and a measurement circuit for operating said transducers.

The lower surface L_S of the housing body has circular structures ST1, ST2 spaced apart, and in the same plane, to receive respective cylindrically shaped piezo electric ultrasonic transducers. Inside each of these structures ST1, ST2, two flat spring portions of two electrically conductive members are arranged to allow electrical connection to the transducers when arranged in the structures ST1, ST2.

In the A-A section view, it is seen that the electrically conductive members ECM1, ECM2 extend from the structures ST1, ST2 for the ultrasonic transducers on the lower surface L_S to the upper surface U_S, where a cavity is formed for housing a measurement circuit.

The electrically conductive members ECM, ECM1, ECM2 are seen to be generally S-shaped, see especially in the section A-A view. Here it is seen that the housing body HB can be formed slim (i.e. with a limited height in the section A-A view), since the S-shape allows casting of the electrically conductive members into the polymeric material of the housing body HB to provide a watertight and electrically insulated passage between the lower surface L_S and the upper surface U_S of the housing body HB. The cavity where the electrically conductive members ECM1, ECM2 extend on the upper surface U_S is arranged between the structures ST1, ST2, and thus via the S-shape, the difference in height (seen in the A-A section view) can be minimised from where the transducers are arranged to where the measurement circuit is arranged, thereby providing a slim housing structure.

In the area above the structures ST1, ST2, reinforcing structures RFS in the form of ribs are formed in the polymeric material so as to reinforce the housing body HB so as to withstand fluid pressure via the transducers and thus via the structures ST1, ST2. Two holes adjacent to the reinforcing structures RFS serve to allow bolts to fasten the housing to a flow meter tube.

Fig. 2 shows a 3D view of the embodiment from Fig. 1, where the flat spring portions of the electrically conductors ECM are visible on one side of the housing body HB, i.e. in the bottom of the cavity CV arranged for housing the measurement circuit.

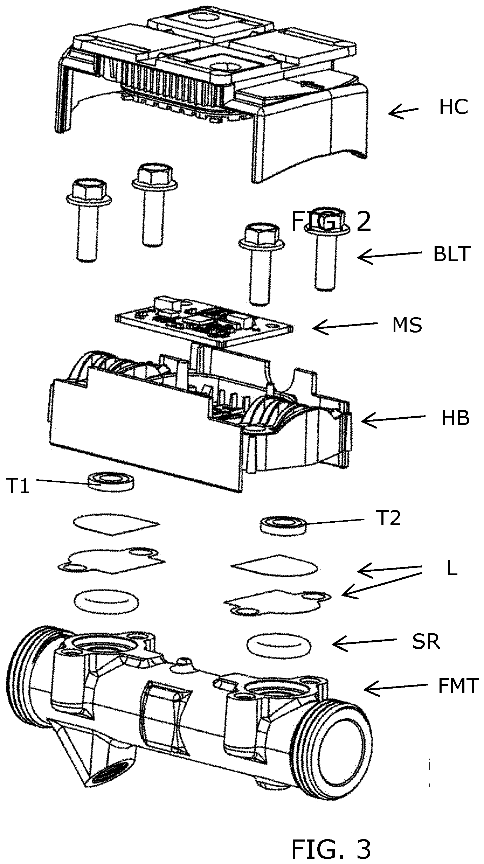

Fig. 3 shows an exploded view of an ultrasonic flow meter embodiment, where the housing body HB embodiment with integrated electrically conductive members from Figs. 1 and 2 serves, together with the matching housing cover HC, e.g. together with a sealing o-ring (not shown), to form a watertight cavity for measurement circuit MS. This ultrasonic flow meter is preferably a transit time flow meter arranged to measure a flow rate of a liquid flowing in the flow meter tube FMT by use of the known operation principle for transit time flow meters, where ultrasonic signals are emitted at one transducer and received at the other transducer, and where the difference in time-of-arrival between oppositely propagating signals is measured and converted into a flow rate.

The circular shaped ultrasonic transducers T1, T2 are operated by the measurement circuit MS, which based on the involved signals generate a signal or value indicative of the flow rate of the fluid, e.g. by means of a generated electrical pulse train indicative of the measured fluid flow rate. The operational electrical connection between the transducers T1, T2 and the measurement circuit MS is provided by means of the electrically conductive members integrated in the housing body HB, as explained above in connection with Figs. 1 and 2.

The measurement circuit MS is here shown as one single PCB with contact points on its lower surface for connection to the two flat spring portions (see Figs. 1 and 2) serving to provide electrical contact to each of the transducers T1, T2.

The level of signal treatment of the measurement circuit may vary from basic signal treatment, where processed signals are output to a further electronic unit for further signal processing, to a complete signal treatment resulting in the determination of the flow rate. Such further electronic units may advantageously be provided inside the cavity formed by the housing cover HC and the housing body HB, optionally with the PCB, or it may be provided in a separate unit connected to the housing. Inside the cavity, further components may be arranged, such as a radio circuit for transmitting at least the quantity value as well as a power supply, such as a battery for powering at least the measurement circuit. These components may, however, as well be arranged with a separate unit.

Four bolts BLT serve to fasten the housing body HB to the metallic flow meter tube FMT. The transducers include the piezoelectric elements T1, T2 as well as acoustically conductive coupling layers L1 and membranes L2, which together with sealing rings SR serve to provide a watertight fit between the transducers and openings in the flow meter tube FMT.

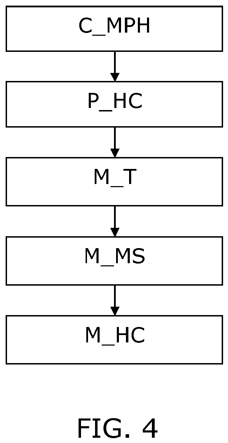

Fig. 4 illustrates steps of manufacturing an ultrasonic flow meter. First step C_MPH is casting a monolithic polymer housing body with electrically conductive members extending from a lower surface to an upper surface. With the casting step C_MPH the electrically conductive members ECM1, ECM2 are fixed with casting tool, exposed for casting except for the flat spring portions, and the monolithic polymer housing is cast, preferably injection moulding, around the electrically conductive member ECM1, ECM2 in a single step or multi-step casting process, so as to provide a watertight fit around these members except for the flat spring portions.

Next step P_HC is providing a housing cover, e.g. a cast polymeric housing cover that matches the housing body. The next steps are then to mount ultrasonic transducers M_T, to mount measurement circuit M_MS in the cavity formed between the housing body and the housing cover, and finally to mount the housing cover M_HC on the housing body to form an ultrasonic flow meter housing unit.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. An ultrasonic flow meter housing comprising:
- a housing body (HB) having an upper surface (U_S) and a lower surface (L_S), and wherein the lower surface (L_S) is arranged for mounting onto a flow meter tube (FMT), wherein first and second structures (ST1, ST2) on the lower surface (L_S) are shaped to receive respective first and second ultrasonic transducers (T1, T2) separated by a distance,
- a housing cover (HC) arranged for engagement with the upper surface (U_S) of the housing body (HB) so as to provide a cavity (CV) arranged for housing a measurement circuit (MS), and
- a plurality of electrically conductive members (ECM, ECM1, ECM2) extending from the lower surface (L_S) to the upper surface (U_S) of the housing body (HB), wherein said plurality of electrically conductive members (ECM, ECM1, ECM2) serve to operationally connect the first and second ultrasonic transducers (T1, T2) with the measurement circuit (MS),
**characterized in that** the housing body (HB) is constituted by one monolithic polymeric element shaped to integrate all of the plurality of electrically conductive members (ECM, ECM1, ECM2) which are cast in said monolithic polymeric element such that the material forming the monolithic polymeric element provides a watertight fit to the plurality of electrically conducting members between the lower surface (L_S) and the upper surface (U_S) of the housing body (HB), and **in that** said monolithic polymeric element and said plurality of electrically conductive members constitute one single unit arranged for assembly with the first and second ultrasonic transducers (T1, T2) and the measurement circuit (MS), and said plurality of electrically conductive members provide operational electrical connection between the first and second ultrasonic transducers (T1, T2) and the measurement circuit (MS) in an assembled state.

2. Ultrasonic flow meter housing according to any of the preceding claims, wherein the housing body (HB) and the housing cover (HC) are shaped to form matching portions which, together with a sealing element (SR), serve to form a watertight cavity (CV) for housing the measurement circuit (MS).

3. Ultrasonic flow meter housing according to any of the preceding claims, wherein said plurality of electrically conductive members (ECM, ECM1, ECM2) comprise monolithic electrically conductive elements.

4. Ultrasonic flow meter housing according to any of the preceding claims, wherein said plurality of electrically conductive members (ECM, ECM1, ECM2) are metallic members.

5. Ultrasonic flow meter housing according to any of the preceding claims, wherein the plurality of electrically conductive members (ECM, ECM1, ECM2) are fixed in position by the housing body (HB) and shaped to provide a spring effect to ensure electrical contact with the first and second ultrasound transducers (T1, T2), and the measurement circuit (MS), when pressed against the electrically conductive members (ECM, ECM1, ECM2) in an assembled state.

6. Ultrasonic flow meter housing according to claim 5, wherein said electrically conductive members (ECM, ECM1, ECM2) are shaped to electrically contact one of the ultrasonic transducers (T1, T2) in one end by a first flat spring portion, and to electrically contact the measurement circuit (MS) in the opposite end by a second flat spring portion.

7. Ultrasonic flow meter housing according to any of the preceding claims, wherein at least a portion of said electrically conductive members (ECM, ECM1, ECM2) are arranged in relation to the housing body (HB) such that a contact point with one of the ultrasonic transducer (T1, T2) and a contact point with the measurement circuit (MS) are spaced apart, such as spaced apart in a direction of a plane comprising the lower surface (L_S) of the body housing (HB).

8. Ultrasonic flow meter housing according to claim 7, wherein said at least one portion of electrically conductive members (ECM, ECM1, ECM2) are S-shaped.

9. Ultrasonic flow meter housing according to any of the preceding claims, comprising two separate electrically conductive members (ECM1) arranged for electrically connecting the first ultrasonic transducer (T1) and the measurement circuit (MS), and comprising two separate electrically conductive members (ECM2) arranged for electrically connecting the second ultrasonic transducer (T2) and the measurement circuit (MS).

10. Ultrasonic flow meter housing according to any of the preceding claims, wherein the housing body (HB) has a reinforcing structure (RFS) on its upper surface (U_S) above each of said first and second structures (ST1, ST2) on the lower surface (L_S) shaped to support respective first and second ultrasonic transducers (T1, T2), so as to withstand fluid pressure from fluid in the flow meter tube (FMT).

11. Ultrasonic flow meter housing according to claim 10, comprising holes adjacent to said reinforcing structure (RFS), so as to allow the housing body (HB) to be fastened to the flow meter tube (FMT).

12. Ultrasonic consumption meter comprising
- an ultrasonic flow meter housing (HB, HC) according to any of claims 1-11,
- a flow meter tube (FMT),
- first and second ultrasonic transducers (T1, T2) arranged to fit into the respective first and second structures (ST1, ST2) of the lower surface of the housing body (HB), and
- a measurement circuit (MS) arranged to fit into the cavity (CV).

13. Method of manufacturing an ultrasonic flowmeter housing, the method comprising
- casting (C_MPH) a monolithic polymeric housing body around a plurality of electrically conductive members so as to fixate their positions, wherein the plurality of electrically conductive members extend through the housing body from an upper surface to a lower surface of the housing body, wherein the lower surface is arranged for mounting onto a flow meter tube, wherein first and second structures on the lower surface are shaped to receive respective first and second ultrasonic transducers separated by a distance, wherein the material forming the monolithic polymeric element provides a watertight fit to the plurality of electrically conducting members between the lower surface (L_S) and the upper surface (U_S) of the housing body (HB), wherein said monolithic polymeric element and said plurality of electrically conductive members constitute one single unit arranged for assembly with the first and second ultrasonic transducers (T1, T2) and the measurement circuit (MS), and wherein said plurality of electrically conductive members serve to operationally connect the first and second ultrasonic transducers with a measurement circuit in an assembled state, and
- providing a housing cover (P_HC) arranged for engagement with the upper surface of the housing body so as to provide a cavity arranged for housing the measurement circuit.

## Patentansprüche

1. Ultraschalldurchflussmessergehäuse, umfassend:
- einen Gehäusekörper (HB) mit einer oberen Fläche (U_S) und einer unteren Fläche (L_S), und wobei die untere Fläche (L_S) zum Montieren auf ein Durchflussmesserrohr (FMT) angeordnet ist, wobei eine erste und eine zweite Struktur (ST1, ST2) auf der unteren Fläche (L_S) dazu geformt sind, einen entsprechenden ersten und zweiten Ultraschallwandler (T1, T2), die durch einen Abstand getrennt sind, aufzunehmen,
- eine Gehäuseabdeckung (HC), die zum Eingriff mit der oberen Fläche (U_S) des Gehäusekörpers (HB) angeordnet ist, um so einen Hohlraum (CV) bereitzustellen, der zum Aufnehmen einer Messschaltung (MS) angeordnet ist, und
- eine Vielzahl von elektrisch leitenden Elementen (ECM, ECM1, ECM2), die von der unteren Fläche (L_S) zu der oberen Fläche (U_S) des Gehäusekörpers (HB) verlaufen, wobei die Vielzahl von elektrisch leitenden Elementen (ECM, ECM1, ECM2) dazu dient, den ersten und den zweiten Ultraschallwandler (T1, T2) mit der Messschaltung (MS) wirkzuverbinden,
**dadurch gekennzeichnet, dass** der Gehäusekörper (HB) durch ein monolithisches Polymerelement gebildet ist, das dazu geformt ist, die Gesamtheit der Vielzahl von elektrisch leitenden Elementen (ECM, ECM1, ECM2), die in dem monolithischen Polymerelement gegossen sind, zu integrieren, sodass das Material, dass das monolithische Polymerelement bildet, eine wasserdichte Passform für die Vielzahl von elektrisch leitenden Elementen zwischen der unteren Fläche (L_S) und der oberen Fläche (U_S) des Gehäusekörpers (HB) bereitstellt, und dadurch, dass das monolithische Polymerelement und die Vielzahl von elektrisch leitenden Elementen eine einzelne Einheit bilden, die zum Zusammenbau mit dem ersten und dem zweiten Ultraschallwandler (T1, T2) und der Messschaltung (MS) angeordnet ist, und die Vielzahl von elektrisch leitenden Elementen eine elektrische Wirkverbindung zwischen dem ersten und dem zweiten Ultraschallwandler (T1, T2) und der Messschaltung (MS) in einem zusammengebauten Zustand bereitstellt.

2. Ultraschalldurchflussmessergehäuse nach einem der vorhergehenden Ansprüche, wobei der Gehäusekörper (HB) und die Gehäuseabdeckung (HC) so geformt sind, dass sie passende Abschnitte bilden, die zusammen mit einem Abdichtelement (SR) dazu dienen, einen wasserdichten Hohlraum (CV) zum Aufnehmen der Messschaltung (MS) zu bilden.

3. Ultraschalldurchflussmessergehäuse nach einem der vorhergehenden Ansprüche, wobei die Vielzahl von elektrisch leitenden Elementen (ECM, ECM1, ECM2) monolithische, elektrisch leitende Elemente umfasst.

4. Ultraschalldurchflussmessergehäuse nach einem der vorhergehenden Ansprüche, wobei die Vielzahl von elektrisch leitenden Elementen (ECM, ECM1, ECM2) metallische Elemente sind.

5. Ultraschalldurchflussmessergehäuse nach einem der vorhergehenden Ansprüche, wobei die Vielzahl von elektrisch leitenden Elementen (ECM, ECM1, ECM2) durch den Gehäusekörper (HB) in Position fixiert sind und dazu geformt sind, eine Federwirkung bereitzustellen, um elektrischen Kontakt mit dem ersten und dem zweiten Ultraschallwandler (T1, T2) und der Messchaltung (MS) sicherzustellen, wenn sie in einem zusammengebauten Zustand gegen die elektrisch leitenden Elemente (ECM, ECM1, ECM2) gedrückt werden.

6. Ultraschalldurchflussmessergehäuse nach Anspruch 5, wobei die elektrisch leitenden Elemente (ECM, ECM1, ECM2) dazu geformt sind, einen elektrischen Kontakt mit einem der Ultraschallwandler (T1, T2) an einem Ende durch einen ersten flachen Federabschnitt herzustellen und einen elektrischen Kontakt mit der Messschaltung (MS) an dem gegenüberliegenden Ende durch einen zweiten flachen Federabschnitt herzustellen.

7. Ultraschalldurchflussmessergehäuse nach einem der vorhergehenden Ansprüche, wobei zumindest ein Abschnitt der elektrisch leitenden Elemente (ECM, ECM1, ECM2) in Bezug zu dem Gehäusekörper (HB) so angeordnet ist, dass ein Kontaktpunkt mit einem der Ultraschallwandler (T1, T2) und ein Kontaktpunkt mit der Messschaltung (MS) voneinander beabstandet sind, wie etwa in einer Richtung einer Ebene, die die untere Fläche (L_S) des Gehäusekörpers (HB) umfasst, beabstandet sind.

8. Ultraschalldurchflussmessergehäuse nach Anspruch 7, wobei der zumindest eine Abschnitt von elektrisch leitenden Elementen (ECM, ECM1, ECM2) S-förmig ist.

9. Ultraschalldurchflussmessergehäuse nach einem der vorhergehenden Ansprüche, umfassend zwei getrennte elektrisch leitende Elemente (ECM1), die zum elektrischen Verbinden des ersten Ultraschallwandlers (T1) und der Messschaltung (MS) angeordnet sind, und umfassend zwei getrennte elektrisch leitende Elemente (ECM2), die zum elektrischen Verbinden des zweiten Ultraschallwandlers (T2) und der Messschaltung (MS) angeordnet sind.

10. Ultraschalldurchflussmessergehäuse nach einem der vorhergehenden Ansprüche, wobei der Gehäusekörper (HB) eine Verstärkungsstruktur (RFS) an seiner oberen Fläche (U_S) über jeder der ersten und der zweiten Struktur (ST1, ST2) an der unteren Fläche (L_S) aufweist, dazu geformt, den jeweiligen ersten bzw. zweiten Ultraschallwandler (T1, T2) zu stützen, um so Fluiddruck durch Fluid in dem Durchflussmessrohr (FMT) standzuhalten.

11. Ultraschalldurchflussmessergehäuse nach Anspruch 10, umfassend Löcher neben der Verstärkungsstruktur (RFS), um es dem Gehäusekörper (HB) so zu ermöglichen, an dem Durchflussmesserrohr (FMT) befestigt zu werden.

12. Ultraschallverbrauchsmesser, umfassend
- ein Ultraschalldurchflussmessergehäuse (HB, HC) nach einem der Ansprüche 1-11,
- ein Durchflussmesserrohr (FMT),
- einen ersten und einen zweiten Ultraschallwandler (T1, T2), die dazu angeordnet sind, in die jeweilige erste und zweite Struktur (ST1, ST2) der unteren Fläche des Gehäusekörpers (HB) zu passen, und
- eine Messchaltung (MS), die dazu angepasst ist, in den Hohlraum (CV) zu passen.

13. Verfahren zum Herstellen eines Ultraschalldurchflussmessergehäuses, wobei das Verfahren Folgendes umfasst:
- Gießen (C_MPH) eines monolithischen Polymergehäusekörpers um eine Vielzahl von elektrisch leitenden Elementen, um so deren Positionen zu fixieren, wobei die Vielzahl von elektrisch leitenden Elementen durch den Gehäusekörper von einer oberen Fläche zu einer unteren Fläche des Gehäusekörpers verläuft, wobei die untere Fläche zum Montieren auf einem Durchflussmesserrohr angeordnet ist, wobei die erste und die zweite Struktur auf der unteren Fläche dazu geformt sind, einen jeweiligen ersten und zweiten Ultraschallwandler, die durch einen Abstand getrennt sind, aufzunehmen, wobei das Material, das das monolithische Polymerelement bildet, eine wasserdichte Passform für die Vielzahl von elektrisch leitenden Elementen zwischen der untere Fläche (L_S) und der oberen Fläche (U_S) des Gehäusekörpers (HB) bereitstellt, wobei das monolithische Polymerelement und die Vielzahl von elektrisch leitenden Elementen eine einzelne Einheit bilden, die zum Zusammenbau mit dem ersten und dem zweiten Ultraschallwandler (T1, T2) und der Messschaltung (MS) angeordnet ist, und wobei die Vielzahl von elektrisch leitenden Elementen dazu dient, in einem zusammengebauten Zustand den ersten und den zweiten Ultraschallwandler mit einer Messchaltung wirkzuverbinden, und
- Bereitstellen einer Gehäuseabdeckung (P_HC), die zum Eingriff mit der oberen Fläche des Gehäusekörpers angeordnet ist, um so einen Hohlraum bereitzustellen, der zum Aufnehmen der Messschaltung angeordnet ist.

## Revendications

1. Boîtier de débitmètre à ultrasons comprenant :
- un corps de boîtier (HB) possédant une surface supérieure (U_S) et une surface inférieure (L_S), et ladite surface inférieure (L_S) étant agencée pour être montée sur un tube de débitmètre (FMT), des première et seconde structures (ST1, ST2) sur la surface inférieure (L_S) étant façonnées pour recevoir des premier et second transducteurs ultrasonores respectifs (T1, T2) séparés par une distance,
- un couvercle de boîtier (HC) agencé pour se mettre en prise avec la surface supérieure (U_S) du corps de boîtier (HB) de façon à fournir une cavité (CV) agencée pour loger un circuit de mesure (MS), et
- une pluralité d'éléments électriquement conducteurs (ECM, ECM1, ECM2) s'étendant à partir de la surface inférieure (L_S) jusqu'à la surface supérieure (U_S) du corps de boîtier (HB), ladite pluralité d'éléments électriquement conducteurs (ECM, ECM1, ECM2) servant à raccorder fonctionnellement les premier et second transducteurs ultrasonores (T1, T2) au circuit de mesure (MS),
**caractérisé en ce que** le corps de boîtier (HB) est constitué par un élément polymère monolithique façonné pour intégrer l'ensemble de la pluralité d'éléments électriquement conducteurs (ECM, ECM1, ECM2) qui sont coulés dans ledit élément polymère monolithique de sorte que le matériau formant l'élément polymère monolithique assure un ajustement étanche à la pluralité d'éléments électriquement conducteurs entre la surface inférieure (L_S) et la surface supérieure (U_S) du corps de boîtier (HB), et **en ce que** ledit élément polymère monolithique et ladite pluralité d'éléments électriquement conducteurs constituent un unité unique agencée en vue de l'assemblage avec les premier et second transducteurs ultrasonores (T1, T2) et le circuit de mesure (MS), et ladite pluralité d'éléments électriquement conducteurs fournissant un raccord électrique fonctionnelle entre les premier et second transducteurs ultrasonores (T1, T2) et le circuit de mesure (MS) à l'état assemblé.

2. Boîtier de débitmètre à ultrasons selon l'une quelconque des revendications précédentes, ledit corps de boîtier (HB) et ledit couvercle de boîtier (HC) étant façonnés pour former des parties correspondantes qui, ensemble avec un élément d'étanchéité (SR), servent à former une cavité étanche (CV) destinée à loger le circuit de mesure (MS).

3. Boîtier de débitmètre à ultrasons selon l'une quelconque des revendications précédentes, ladite pluralité d'éléments électriquement conducteurs (ECM, ECM1, ECM2) comprenant des éléments électriquement conducteurs monolithiques.

4. Boîtier de débitmètre à ultrasons selon l'une quelconque des revendications précédentes, ladite pluralité d'éléments électriquement conducteurs (ECM, ECM1, ECM2) étant des éléments métalliques.

5. Boîtier de débitmètre à ultrasons selon l'une quelconque des revendications précédentes, ladite pluralité d'éléments électriquement conducteurs (ECM, ECM1, ECM2) étant fixés en position par le corps de boîtier (HB) et façonnés pour fournir un effet d'élasticité pour assurer un contact électrique avec les premier et second transducteurs ultrasonores (T1, T2), et le circuit de mesure (MS), lorsqu'ils sont pressés contre les éléments électriquement conducteurs (ECM, ECM1, ECM2) dans un état assemblé.

6. Boîtier de débitmètre à ultrasons selon la revendication 5, lesdits éléments électriquement conducteurs (ECM, ECM1, ECM2) étant façonnés pour contacter électriquement l'un des transducteurs à ultrasons (T1, T2) dans une extrémité par une première partie élastique plate, et pour contacter électriquement le circuit de mesure (MS) dans l'extrémité opposée par une seconde partie élastique plate.

7. Boîtier de débitmètre à ultrasons selon l'une quelconque des revendications précédentes, au moins une partie desdits éléments électriquement conducteurs (ECM, ECM1, ECM2) étant agencée par rapport au corps de boîtier (HB) de sorte qu'un point de contact avec l'un du transducteur à ultrasons (T1, T2) et un point de contact avec le circuit de mesure (MS) soient espacés l'un de l'autre, tels qu'espacés dans une direction d'un plan comprenant la surface inférieure (L_S) du boîtier de corps (HB).

8. Boîtier de débitmètre à ultrasons selon la revendication 7, ladite au moins une partie des éléments électriquement conducteurs (ECM, ECM1, ECM2) étant en forme de S.

9. Boîtier de débitmètre à ultrasons selon l'une quelconque des revendications précédentes, comprenant deux éléments électriquement conducteurs séparés (ECM1) agencés pour raccorder électriquement le premier transducteur à ultrasons (T1) et le circuit de mesure (MS), et comprenant deux éléments électriquement conducteurs séparés (ECM2) agencés pour raccorder électriquement le second transducteur ultrasonore (T2) et le circuit de mesure (MS).

10. Boîtier de débitmètre à ultrasons selon l'une quelconque des revendications précédentes, ledit corps de boîtier (HB) comportant une structure de renforcement (RFS) sur sa surface supérieure (U_S) au-dessus de chacune desdites première et seconde structures (ST1, ST2) sur la surface inférieure (L_S) façonnée pour supporter des premier et second transducteurs à ultrasons respectifs (T1, T2), de façon à résister à la pression de fluide provenant du fluide dans le tube de débitmètre (FMT).

11. Boîtier de débitmètre à ultrasons selon la revendication 10, comprenant des trous adjacents à ladite structure de renforcement (RFS), de façon à permettre au corps de boîtier (HB) d'être fixé au tube de débitmètre (FMT).

12. Compteur de consommation à ultrasons comprenant :
- un boîtier de débitmètre à ultrasons (HB, HC) selon l'une quelconque des revendications 1 à 11,
- un tube débitmètre (FMT),
- des premier et second transducteurs ultrasonores (T1, T2) agencés pour s'ajuster dans les première et seconde structures respectives (ST1, ST2) de la surface inférieure du corps de boîtier (HB), et
- un circuit de mesure (MS) agencé pour s'insérer dans la cavité (CV).

13. Procédé de fabrication d'un boîtier de débitmètre à ultrasons, ledit procédé comprenant :
- le coulage (C_MPH) d'un corps de boîtier polymère monolithique autour d'une pluralité d'éléments électriquement conducteurs de façon à fixer leurs positions, ladite pluralité d'éléments électriquement conducteurs s'étendent à travers le corps de boîtier à partir d'une surface supérieure jusqu'à une surface inférieure du corps de boîtier, ladite surface inférieure étant agencée pour être montée sur un tube de débitmètre, des première et seconde structures sur la surface inférieure étant façonnées pour recevoir des premier et second transducteurs à ultrasons respectifs séparés par une distance, ledit matériau formant l'élément polymère monolithique fournissant un ajustement étanche pour la pluralité d'éléments électriquement conducteurs entre la surface inférieure (L_S) et la surface supérieure (U_S) du corps de boîtier (HB), ledit élément polymère monolithique et ladite pluralité d'éléments électriquement conducteurs constituant une unique unité agencée pour l'assemblage avec les premier et second transducteurs ultrasonores (T1, T2) et le circuit de mesure (MS), et ladite pluralité d'éléments électriquement conducteurs servant à raccorder fonctionnellement les premier et second transducteurs ultrasonores à un circuit de mesure dans un état assemblé, et
- la disposition d'un couvercle de boîtier (P_HC) agencé pour se mettre en prise avec la surface supérieure du corps de boîtier de façon à fournir une cavité agencée pour loger le circuit de mesure.
